# EUROPÄISCHE PATENTSCHRIFT

(11) **EP 0 848 679 B1**
(45) Veröffentlichungstag und Bekanntmachung des Hinweises auf die Patenterteilung: **05.04.2000**
(21) Anmeldenummer: 96931766.8
(22) Anmeldetag: 04.09.1996
(51) Int. Cl.: B62D 5/08, B62D 6/10, G01L 5/22

(54) **LENKVENTIL**
STEERING VALVE
VALVE DE BRAQUAGE

(30) Priorität: 08.09.1995 DE 19533152
(43) Veröffentlichungstag der Anmeldung: 24.06.1998
(73) Patentinhaber: TRW Fahrwerksysteme GmbH & Co. KG, 40547 Düsseldorf (DE)
(72) Erfinder: HEITZER, Heinz-Dieter, D-52525 Heinsberg (DE)
(74) Vertreter: Stenger, Watzke & Ring Patentanwälte
(86) Internationale Anmeldenummer: EP9603876
(87) Internationale Veröffentlichungsnummer: WO9709221

(56) Entgegenhaltungen:
- EP-A- 0 575 634
- DE-A- 2 734 182
- US-A- 5 103 715
- US-A- 5 307 892
- TECHNISCHES MESSEN, Bd. 58, Nr. 9, 1.September 1991, MÜNCHEN, Seiten 329-334, XP000262330 BALDAUF W: "FREQUENZANALOGE DREHMOMENTMESSUNG MIT OBERFLAECHENWELLEN- RESONATOREN"

## Beschreibung

Die Erfindung betrifft eine Servolenkung mit Lenkventil, bestehend aus einer Eingangswelle und einer Ausgangswelle, die drehbar gelagert in einem Gehäuse eingesetzt sind, wobei die Ausgangswelle mit einer Zahnstange eines Lenkgetriebes im Eingriff steht, sowie einem torsionselastischen Element, das mit seinem einen Ende mit der Eingangswelle und mit seinem anderen Ende mit der Ausgangswelle verbunden ist und auf welches von der Eingangswelle einerseits und der Ausgangswelle andererseits ein Drehmoment übertragbar ist (siehe US-A-5,103,715).

Servolenkungen der gattungsgemäßen Art sind aus dem Stand der Technik bekannt, wobei als Lenkventile insbesondere sogenannte Drehschieberventile Verwendung finden. Hier werden beispielsweise hydraulische Steuermittel verwendet, die in Abhängigkeit von der relativen Verdrehung zwischen Eingangs- und Ausgangswelle, die ihrerseits wiederum von der Federcharakteristik des torsionselastischen Elementes abhängt, Hydrauliksteuerbohrungen relativ zueinander verschieben, so daß es zu einem Hydraulikmittelfluß kommt. Andere Steuerarten sind denkbar.

Um derartige Servolenkungen in definierte Weise gesteuert einsetzen zu können, werden die unterschiedlichsten Maßnahmen ergriffen, um mittels Sensoren Signale erfassen zu können. Dabei werden jedoch praktisch keine direkten Meßwerte erzeugt, sondern nur indirekte Funktionsgrößen, aus denen der jeweilige gewünschte Wert bestimmen kann. So ist es beispielsweise wünschenswert, lenkmomentabhängige elektrische Signale zu erzeugen, um diese zur Steuerung zu verwenden. Dazu kann entweder das Lenkmoment mittels eines Torsionselements in eine meßbare Relativbewegung zweier Bauteile einer Lenkvorrichtung der gattungsgemäßen Art umgesetzt werden oder die Dehnung auf der Oberfläche des Torsionselements direkt gemessen werden. Zur Messung von Dehnungen sind verschiedene kostengünstige Verfahren mit hoher Genauigkeit bekannt. Allerdings gestaltet sich die Anwendung auf die Messung von Lenkmomenten problematisch, da die Lenkwelle (Eingangswelle) nicht nur auf Torsion sondern auch auf Biegung beansprucht wird und bei einem herkömmlichen Torsionselement mit rundem Querschnitt die Oberflächenspannungen aufgrund von Biegemomenten im Vergleich zu den Oberflächenspannungen aufgrund von Torsionsmomenten sehr klein sind.

Eine mechanische Entkopplung beider Beanspruchungsarten z.B. mit Hilfe einer mehrfachen Lagerung der Lenkwelle oder einer Führungshülse erhöht nicht nur den Bauaufwand für die Lenkvorrichtung erheblich sondern kann aufgrund der unvermeidbaren Lagerreibung zu einer nicht zu akzeptierenden Hysterese im Lenkmomentsignal führen.

Aus der US 5,103,715 ist ein Servolenksystem bekannt, bei welchem das Verhältnis von Eingangs- zu Ausgangsdrehkraft variabel ist. Offenbart ist hier ein Servolenksystem, bestehend aus einer Eingangswelle und einer Ausgangswelle sowie einem die Eingangswelle und die Ausgangswelle miteinander verbindenden torsionselastischen Element in Gestalt eines Torsionsstabes. Des weiteren umfaßt das Servolenksystem eine mit der Ausgangswelle in Eingriff stehende Ritzelwelle.

In der DE 27 34 182 A1 ist eine Vorrichtung zum Messen von Lenkmomenten und Lenkwinkeln bei Fahrzeugen angegeben, wobei im Lenkradbereich eine Lenkspindel und eine damit verbindbare Meßnabe zur Messung der Lenkmomente angeordnet sind, und wobei ein zusätzliches Meßteil aus einem oberen und einem unteren Ring besteht, die durch räusenartig angeordnete Speichen, versehen mit Dehnungsmeßstreifen, miteinander verbunden sind. Ein derartiges zusätzliches Meßteil führt zu einer Neukonstruktion herkömmlicher Lenkventile und zu einer erheblichen Vergrößerung. Ein Drehmomentsensor ist in der EP 0575634 A1 offenbart.

Davon ausgehend liegt der vorliegenden Erfindung die **Aufgabe** zugrunde, ein Lenkventil der gattungsgemäßen Art dahingehend weiterzuentwickeln, daß einerseits Lenkmomente zu einfach meßbaren Oberflächendehnungen an einem der Bauteile führen und andererseits Biegebeanspruchungen der Lenkwelle (Eingangswelle) keinen nennenswerten Einfluß auf das Meßergebnis haben.

Zur technischen **Lösung** dieser Aufgabe wird mit der Erfindung vorgeschlagen, daß das torsionselastische Element als Torsionssteganordnung ausgebildet ist, die durch eine Mehrzahl separat angeordneter Stege gebildet ist, wobei durch Messung der mechanischen Belastung wenigstens zweier Stege das Lenkmoment unabhängig von auf die Eingangswelle einwirkenden Biegebeanspruchungen exakt bestimmbar ist.

Die erfindungsgemäße Lösung ermöglicht es, daß Lenkmomente im wesentlichen zu einer Biegebeanspruchung der Stege mit leicht meßbaren Oberflächendehnungen führen, wohingegen Biegemomente an der Lenkwelle (Eingangswelle) im wesentlichen nur Zug- bzw. Druckbeanspruchungen der Stege mit naturgemäß sehr kleinen Oberflächendehnungen hervorrufen.

Die erfindungsgemäße Lösung ermöglicht nun die mechanische Belastung von wenigstens zwei der ein Torsionselement bildenden Stege durch Messungen auszuwerten und somit beispielsweise das Lenkmoment exakt zu messen.

Mit der Erfindung wird vorgeschlagen, daß die Stege in Achsrichtung der Eingangs- bzw. Ausgangswelle verlaufend mit Abstand nebeneinander angeordnet werden. In besonders vorteilhafter Weise werden die Stege ringförmig angeordnet.

In der beschriebenen vorteilhaften Ausgestaltung der Erfindung wird also ein herkömmliches Torsionselement ersetzt durch ringförmig angeordnete Stege, das heißt, die stabförmigen Stegelemente, die gemäß einem Vorschlag der Erfindung vorzugsweise einen rechteckigen oder trapezförmigen Querschnitt aufweisen, sind derart angeordnet, daß sie parallel und mit Abstand zueinander auf der Oberfläche eines imaginären Zylinders verlaufend angeordnet und mit einem Ende an der Eingangswelle und dem anderen Ende an der Ausgangswelle befestigt sind. Der imaginäre Zylinder seinerseits liegt konzentrisch zur Längsmittelachse der aus Eingangs- und Ausgangswelle gebildeten Einheit. Bei einer relativen Verdrehung der Eingangswelle zur Ausgangswelle werden somit die Stegelemente gleichförmig belastet, so daß beispielsweise das Drehmoment repräsentierende Signale direkt meßbar sind. Die Stege können an wenigstens einem Ende durch ein Ringelement miteinander verbunden sein. Dieses kann seinerseits mit einer der beiden Wellen verbunden sein.

Mit besonderem Vorteil wird vorgeschlagen, daß die Stege jeder für sich eine definierte Verformbarkeit aufweisen, so daß die Signalmessung erheblich vereinfacht ist.

Zur Signalmessung werden gemäß einem vorteilhaften Vorschlag der Erfindung auf den Stegen Dehnmeßsensoren angeordnet, in vorteilhafter Weise Dehnmeßstreifen oder sogenannte SAW-Sensoren, das heißt Surface-Acoustic-Wave-Devices. In vorteilhafter Weise sind die Dehnmeßsensoren kompensierend auswertbar angeordnet.

Schließlich wird mit der Erfindung vorgeschlagen, daß die Meßwertübertragung drahtlos erfolgt. Alternativ können selbstverständlich Leitungen, beispielsweise spiralförmig aufgewickelte Flachbandkabel, verwendet werden, so daß Relativverdrehungen sich nicht negativ auf die Meßwertübertragung auswirken können, oder es können drahtlose Übertragungsmethoden, beispielsweise induktive, verwendet werden. Kompensierend beschaltbar bedeutet beispielsweise, daß die Sensoren sich gegenüberliegender Stege für Messungen verwendet werden. Der besondere Vorteil ist dabei darin zu sehen, daß Biegemomente kompensierbar sind. Ein besonderer Vorteil ergibt sich bei der Verwendung von vier Stegen, die jeweils in 90°-Abständen angeordnet sind. Die Dehnmeßstreifen sind leicht auf die einfach zugänglichen Seitenbereiche der Stege aufbringbar, so daß auch bei der Großserienverwendung aufwendige Sensoren, beispielsweise SAW-Sensoren wirtschaftlich verwendbar sind.

Schließlich wird mit der Erfindung vorgeschlagen, daß ein Überbeanspruchungsschutz vorgesehen ist, um eine Zerstörung des erfindungsgemäßen Aufbaus zu vermeiden. Dieser kann beispielsweise darin bestehen, daß die Eingangswelle und die Ausgangswelle über eine gegebene axiale Länge ineinander übergehend verlaufen, wobei die jeweils äußere Welle eine vergrößerte rechteckige Aufnahmeöffnung aufweist, in welcher ein rechteckiges Ende mit kürzeren Kanten der jeweils anderen Welle eingesteckt ist. Ab einem bestimmten Verdrehwinkel sind somit beide Wellen in Kontakt und die drehmomentübertragende Steganordnung kann nicht weiter belastet werden.

Mit der Erfindung wird ein einfaches und wirtschaftliches Lenkventil bereitgestellt, die die Erfassung von Lenkmoment-Meßsignalen und überhaupt die Erfassung elektrischer Signale zur Verwendung in einer Steuerung ermöglicht.

Weitere Vorteile und Merkmale der Erfindung ergeben sich aus der folgenden Beschreibung anhand der Figuren. Dabei zeigen:
- Figur 1: eine schematische Darstellung eines Lenkventils;
- Figur 2: eine schematische Darstellung eines Ausführungsbeispiels eines Torsionselementes;
- Figur 3: eine Darstellung gemäß Figur 2 geschnitten an der Stelle III-III;
- Figur 4: eine schematische Darstellung belasteter Stegelemente und
- Figur 5: eine perspektivische Darstellung eines belasteten torsionselastischen Elementes mit der gerasterten Darstellung von Belastungszonen.

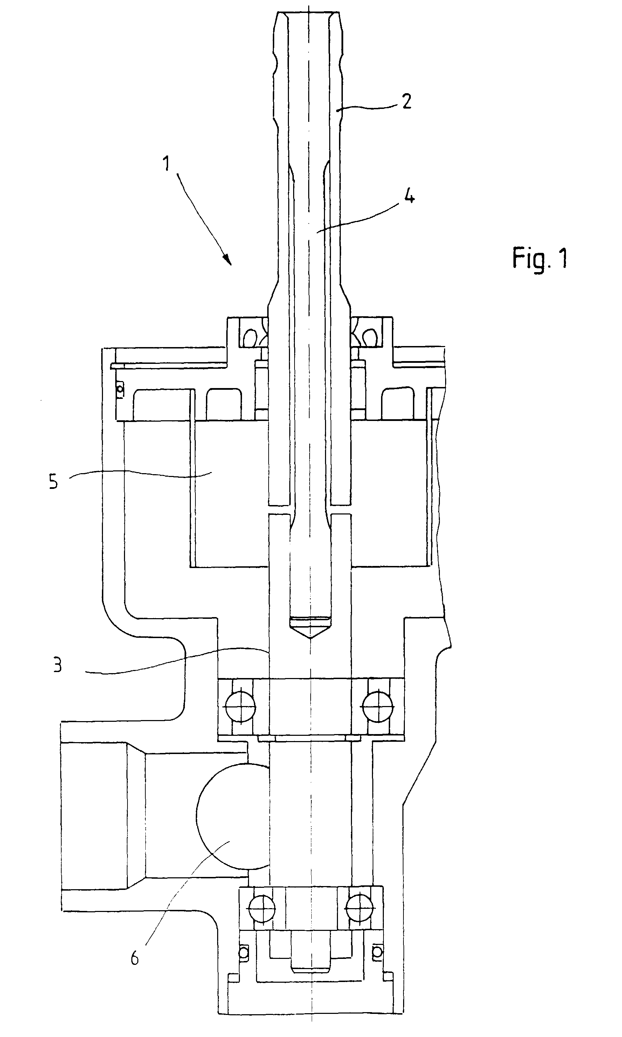

In Figur 1 ist der schematische Aufbau einer Servolenkvorrichtung 1 gezeigt, umfassend eine Eingangswelle 2, eine Ausgangswelle 3, die in einem Gehäuse eingesetzt sind, wobei die Ausgangswelle 3 beispielsweise mit einer Zahnstange 6 eines Lenkgetriebes im Eingriff ist. An der Stelle, wo die Eingangswelle und die Ausgangswelle ineinander übergehen, weist die Eingangswelle an ihrer Stirnfläche einen rechteckigen Abschnitt auf, der in eine rechteckige Aussparung in der Eingangswelle ragt. Die rechteckige Aussparung der Eingangswelle ist gegenüber dem rechteckigen Abschnitt der Eingangswelle vergrößert, so daß beide Wellen 2, 3 um einen vorgegebenen Winkel relativ zueinander verdrehbar sind, bis sie in Kontakt kommen. Innerhalb dieses Verdrehbarkeitsbereiches werden die beiden Wellen durch ein torsionselastisches Element vorgespannt. In an sich bekannter Weise handelt es sich dabei beispielsweise um einen Torsionsstab 4, der nur zu Zwecken der Erläuterung in Figur 1 gezeigt ist. Diese bisher beschriebene Vorrichtung bietet die Möglichkeit, lenkmomentrepräsentierende Meßwerte durch Messen der Relativdrehung zwischen Eingangswelle 2 und Ausgangswelle 3 zu erzeugen. Um die lenkmomentrepräsentativen Meßwerte durch Messen von Oberflächendehnungen erzeugen zu können, wird anstelle des Torsionsstabes 4 eine Torsionssteganordnung 5 eingesetzt.

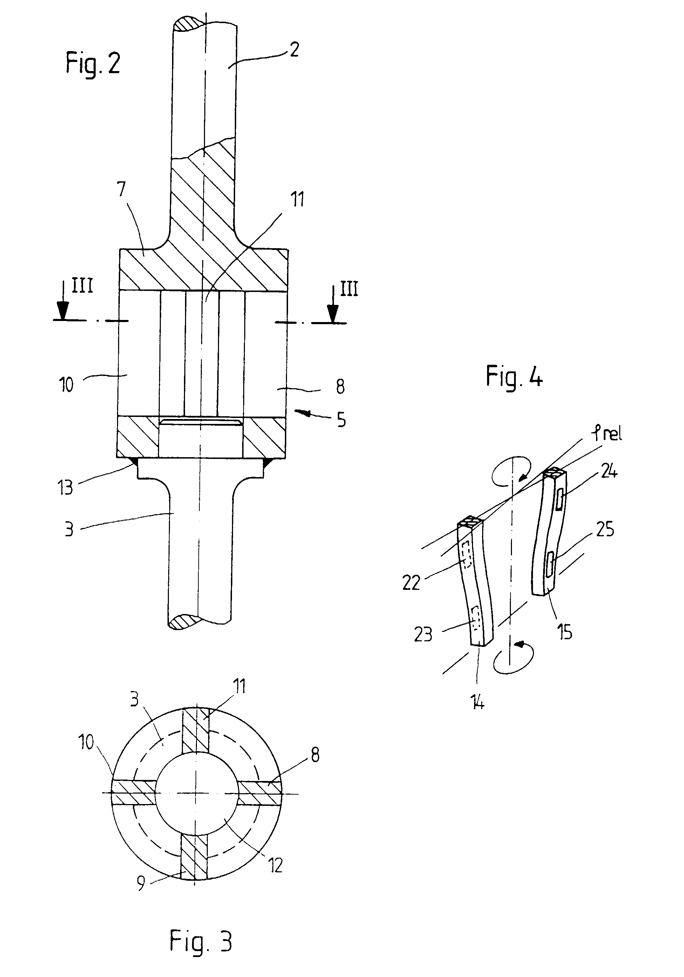

In Figuren 2 und 3 ist ein Ausführungsbeispiel für eine Torsionssteganordnung 5 gezeigt, wobei im gezeigten Ausführungsbeispiel die Eingangswelle 2 einen scheibenförmigen Stirnflansch 7 aufweist, mit welchem einstückig die Stege 8, 9, 10 und 11 ausgebildet sind. Diese sind parallel zueinander entlang der Oberfläche eines imaginären Zylinders 12 koaxial zu der aus Eingangswelle 2 und Ausgangswelle 3 gebildeten Einheit angeordnet und an ihrem anderen Ende einstückig mit einem weiteren Stirnflansch versehen, an dem mittels einer Schweißnaht 13 die Ausgangswelle 3 befestigt ist. Die Eingangswelle 2 kann zentral oder konzentrisch in beliebiger Stärke weitergeführt sein und in der beschriebenen Weise zur Bildung eines Schutzes gegen Überbeanspruchung in die Ausgangswelle 3 hineinragen und/oder umgekehrt.

In Figur 4 ist schematisch die Beanspruchungsart der Stege 14, 15 dargestellt, und zwar infolge einer Belastung einer Torsionssteganordnung in Richtung der Pfeile. Die Eingangswelle wird im Uhrzeigersinn entgegen der Ausgangswelle verdreht. Die Stege 14 und 15, die mit den Meßsensoren 22, 23, 24 und 25 besetzt sind, verformen sich in der gezeigten Weise. Durch elektrische bzw. elektronische Auswertung der von den Dehnmeßsensoren, entweder den Meßstreifen oder SAW-Devices, kann ein das Drehmoment repräsentierendes Signal gemessen werden. Dadurch, daß für die Messung jeweils gegenüberliegende Stege benutzt werden, können beispielsweise Biegemomente vollständig kompensiert werden.

Wie in der Draufsicht gemäß Figur 3 gezeigt ist, können bei der Verwendung von vier Stegen die Dehnmeßstreifen leicht auf die Stegseitenkanten aufgebracht werden, da der Zugangsraum völlig frei ist. Somit eignet sich diese Anordnung besonders auch für eine industrielle Großserienfertigung.

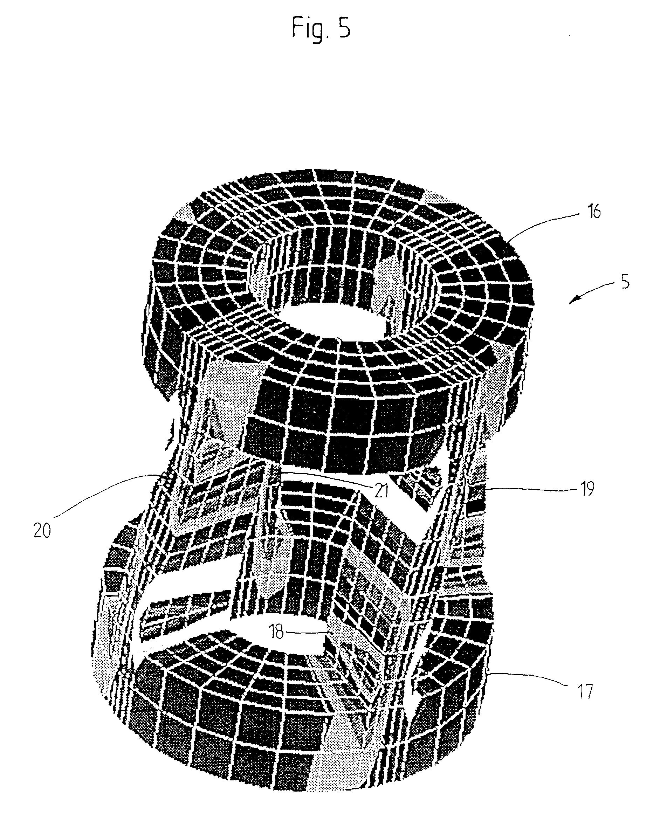

Figur 5 zeigt schließlich ein Ausführungsbeispiel einer Torsionssteganordnung 5, wobei zwischen zwei Ringen 16, 17 die Vierkantstäbe 18, 19, 20 und 21 eingesetzt sind. Der obere Ring ist relativ zum unteren Ring entgegen dem Uhrzeigersinn verdreht, so daß sich die gezeigten Belastungen ergeben. Durch die Rasterung lassen sich auch leicht die Belastungszentren ersehen. Unter Verwendung entsprechender Dehnmeßsensoren lassen sich nun sehr einfach die gewünschten Meßsignale ableiten.

### Bezugszeichenliste:

- 1: Lenkvorrichtung
- 2: Eingangswelle
- 3: Ausgangswelle
- 4: Torsionsstab
- 5: Torsionssteganordnung
- 6: Zahnstange
- 7: Stirnflansch
- 8: Steg
- 9: Steg
- 10: Steg
- 11: Steg
- 12: imaginärer Zylinder
- 13: Schweißnaht
- 14: Steg
- 15: Steg
- 16: Ring
- 17: Ring
- 18: Steg
- 19: Steg
- 20: Steg
- 21: Steg
- 22: Meßsensoren
- 23: Meßsensoren
- 24: Meßsensoren
- 25: Meßsensoren
- ϕᵣₑₗ: Winkel

## Patentansprüche

1. Servolenkung mit Lenkventil, bestehend aus einer Eingangswelle (2) und einer Ausgangswelle (3), die drehbar gelagert in einem Gehäuse eingesetzt sind, wobei die Ausgangswelle (3) mit einer Zahnstange (6) eines Lenkgetriebes im Eingriff steht, sowie einem torsionselastischen Element (4), das mit seinem einen Ende mit der Eingangswelle (2) und mit seinem anderen Ende mit der Ausgangswelle (3) verbunden ist und auf welches von der Eingangswelle (2) einerseits und der Ausgangswelle (3) andererseits ein Drehmoment übertragbar ist,
**dadurch gekennzeichnet**,
daß das torsionselastische Element (4) als Torsionssteganordnung (5) ausgebildet ist, die durch eine Mehrzahl separat angeordneter Stege (8, 9, 10, 11) gebildet ist, wobei durch Messung der mechanischen Belastung wenigstens zweier Stege (14, 15) das Lenkmoment unabhängig von auf die Eingangswelle (2) einwirkenden Biegebeanspruchungen exakt bestimmbar ist.

2. Servolenkung nach Anspruch 1, dadurch gekennzeichnet, daß die Stege (8, 9, 10, 11) in Achsrichtung der Eingangs- bzw. Ausgangswelle verlaufend mit Abstand nebeneinander angeordnet sind.

3. Servolenkung nach einem der vorhergehenden Ansprüche, dadurch gekennzeichnet, daß die Stege (8, 9, 10, 11) ringförmig angeordnet sind.

4. Servolenkung nach Anspruch 3, dadurch gekennzeichnet, daß die Stege (8, 9, 10, 11) durch wenigstens ein Ringelement (16, 17) miteinander verbunden sind.

5. Servolenkung nach einem der vorhergehenden Ansprüche, dadurch gekennzeichnet, daß die Stege (8, 9, 10, 11) einen rechteckigen oder trapezförmigen Querschnitt aufweisen.

6. Servolenkung nach einem der vorhergehenden Ansprüche, dadurch gekennzeichnet, daß die Stege (8, 9, 10, 11) eine definierte Verformbarkeit aufweisen.

7. Servolenkung nach einem der vorhergehenden Ansprüche, dadurch gekennzeichnet, daß die Stege (8, 9, 10, 11) mit den Meßsensoren (22, 23, 24, 25) bestückt sind.

8. Servolenkung nach Anspruch 7, dadurch gekennzeichnet, daß als Dehnmeßsensoren Dehnmeßstreifen angeordnet sind.

9. Servolenkung nach Anspruch 7, dadurch gekennzeichnet, daß als Dehnmeßsensoren SAW-Sensoren angeordnet sind.

10. Servolenkung nach einem der Ansprüche 7 bis 9, dadurch gekennzeichnet, daß die Dehnmeßsensoren kompensierend beschaltbar sind.

11. Servolenkung nach einem der vorhergehenden Ansprüche, dadurch gekennzeichnet, daß die Meßwertübertragung drahtlos erfolgt.

## Claims

1. A servo steering system with a steering valve, comprising an input shaft (2) and an output shaft (3), which are rotatably mounted in a housing, the output shaft (3) engaging with a toothed rack (6) of a steering gear, and a torsion elastic element (4), which is connected at one end to the input shaft (2) and at its other end to the output shaft (3) and to which a torque can be transmitted from the input shaft (2) on the one hand and the output shaft (3) on the other hand, characterised in that the torsion elastic element (4) is constructed as a torsion web arrangement (5), which is formed by a plurality of separately arranged webs (8, 9, 10, 11), it being possible by measuring the mechanical loading of at least two webs (14, 15) to precisely determine the steering torque independently of the bending stresses acting upon the input shaft (2).

2. A servo steering system according to claim 1, characterised in that the webs (8, 9, 10, 11) are arranged adjacent one another and spaced apart extending in the axial direction of the input and output shafts.

3. A servo steering system according to one of the preceding claims, characterised in that the webs (8, 9, 10, 11) are arranged in a circle.

4. A servo steering system according to claim 3, characterised in that the webs (8, 9, 10, 11) are connected to one another by at least one annular element (16, 17).

5. A servo steering system according to one of the preceding claims, characterised in that the webs (8, 9, 10, 11) have a rectangular or trapezoidal cross section.

6. A servo steering system according to one of the preceding claims, characterised in that the webs (8, 9, 10, 11) have a defined deformability.

7. A servo steering system according to one of the preceding claims, characterised in that the webs (8, 9, 10, 11) are fitted with the measurement sensors (22, 23, 24, 25).

8. A servo steering system according to claim 7, characterised in that strain measurement strips are arranged as strain measurement sensors.

9. A servo steering system according to claim 7, characterised in that SAW sensors are arranged as strain measurement sensors.

10. A servo steering system according to one of claims 7 to 9, characterised in that the strain measurement sensors can be wired in compensating fashion.

11. A servo steering system according to one of the preceding claims, characterised in that the measurement value transmission is effected in a wireless manner.

## Revendications

1. Direction assistée munie d'une valve de braquage, composée d'un arbre d'entrée (2) et d'un arbre de sortie (3), logés dans un boîtier de manière à pouvoir tourner, l'arbre de sortie (3) étant en engagement avec une crémaillère (6) d'un mécanisme de direction, ainsi que d'un élément (4) élastique en torsion, dont une extrémité est reliée à l'arbre d'entrée (2) et dont l'autre extrémité est reliée à l'arbre de sortie, et auquel un couple de rotation peut être transmis d'un côté depuis l'arbre d'entrée (2) et de l'autre côté depuis l'arbre de sortie (3),
caractérisée en ce que l'élément (4) élastique en torsion est configuré comme un agencement de ponts de torsion, constitué de plusieurs ponts (8, 9, 10, 11) disposés séparément les uns des autres, la mesure de la contrainte mécanique agissant sur au moins deux (14, 15) des ponts permettant de déterminer avec précision le couple de braquage, indépendamment de sollicitations en flexion de l'arbre d'entrée (2).

2. Direction assistée selon la revendication 1, caractérisée en ce que les ponts (8, 9, 10, 11) s'étendent dans le sens axial des arbres d'entrée ou de sortie et sont disposés à une distance les uns à côté des autres.

3. Direction assistée selon l'une des revendications précédentes, caractérisée en ce que les ponts (8, 9, 10, 11) sont disposés en un anneau.

4. Direction assistée selon la revendication 3, caractérisée en ce que les ponts (8, 9, 10, 11) sont reliés les uns aux autres par l'intermédiaire d'au moins un élément annulaire (16, 17).

5. Direction assistée selon l'une des revendications précédentes, caractérisée en ce que les ponts (8, 9, 10, 11) présentent une section transversale rectangulaire ou trapézoïdale.

6. Direction assistée selon l'une des revendications précédentes, caractérisée en ce que les ponts (8, 9, 10, 11) présentent une déformabilité définie.

7. Direction assistée selon l'une des revendications précédentes, caractérisée en ce que les ponts (8, 9, 10, 11) sont équipés de jauges de mesure (22, 23, 24, 25).

8. Direction assistée selon la revendication 7, caractérisée en ce que les jauges de mesure mises en place sont des jauges extensométriques.

9. Direction assistée selon la revendication 7, caractérisée en ce que les jauges extensométriques utilisées sont des jauges SAW.

10. Direction assistée selon l'une des revendications 7 à 9, caractérisée en ce que les jauges extensométriques peuvent être raccordées de manière compensée.

11. Direction assistée selon l'une des revendications précédentes, caractérisée en ce que la transmission des valeurs de mesure se fait sans fil.
